# EUROPÄISCHE PATENTSCHRIFT

(11) **EP 0 960 287 B1**
(45) Veröffentlichungstag und Bekanntmachung des Hinweises auf die Patenterteilung: **27.10.2004**
(21) Anmeldenummer: 98948712.9
(22) Anmeldetag: 04.08.1998
(51) Int. Cl.: F16C 35/063, F16B 17/00, F16D 1/072

(54) **VERFAHREN ZUM HERSTELLEN EINER WELLEN-NABEN-VERBINDUNG**
METHOD OF PRODUCTION OF A SHAFT-HUB ASSEMBLY
PROCEDE DE REALISATION D'UN ENSEMBLE ARBRE-MOYEU

(30) Priorität: 11.12.1997 DE 19755091
(43) Veröffentlichungstag der Anmeldung: 01.12.1999
(73) Patentinhaber: ROBERT BOSCH GMBH, 70442 Stuttgart (DE)
(72) Erfinder: LAUK, Detlef, D-77871 Renchen (DE); FAUTH, Lothar, D-77815 Bühl (DE); FISCHER, Ernst, D-76593 Gernsbach (DE); KARCHER, Hansjörg, D-77830 Bühlertal (DE); HERP, Jürgen, D-77815 Bühl (DE); MAURER, Erik, D-77815 Buehl (DE); HURST, Richard, D-77656 Offenburg (DE); WAIBEL, Anton, D-88709 Hagnau (DE); WIEGERT, Andreas, D-77876 Kappelrodeck (DE)
(86) Internationale Anmeldenummer: PCT/DE1998/002222
(87) Internationale Veröffentlichungsnummer: WO 1999/030049

(56) Entgegenhaltungen:
- DE-C- 491 362
- FR-A- 2 549 547
- FR-A- 2 630 790
- FR-A- 2 730 538

## Beschreibung

### Stand der Technik

Die Erfindung betrifft ein Verfahren zum Herstellen einer Wellen-Naben-Verbindung gemäß Oberbegriffs des Anspruchs 1 (siehe FR-A-2 630 790).

Bei einer bekannten Wellen-Naben-Verbindung wird, um axiale Verrückungen zu vermeiden, das Lager in der Regel an einem Axialanschlag abgestützt. Der Axialanschlag kann als Stufe auf der Welle ausgebildet sein, was aber eine Welle mit einem vergrößerten Durchmesser bezogen auf den Naben-Innendurchmesser erfordert. Es sind auch Sicherungsringe zur Axialabstützung bekannt, die in einem Einstich in der Welle gehalten sind. Dazu ist es erforderlich, die Welle mit einem eng tolerierten Einstich zu versehen und bei der Montage den geschlitzten Ring vor dem Aufbringen des Lagers aufzuschieben und im Einstich zu verankern. Diese Art der Sicherung ist teuer und aufwendig in der Montage.

### Vorteile der Erfindung

Das erfindungsgemäße Verfahren zum Herstellen einer Wellen-Naben-Verbindung zum Sichern von Lagern mit den Merkmalen des Hauptanspruchs hat den Vorteil, daß nach dem Aufschieben des Lagers in einem einzigen Schritt eine form- und kraftschlüssige Sicherung aufgebracht werden kann. Es ist dabei nicht notwendig, daß die Welle an bestimmten Bereichen im Lager ein Übermaß aufweisen muß. Die durch die plastische Verformung erzeugte Erhebung kann so ausgeführt sein, daß sie zum einen eine axiale Flächenkomponente aufweist, die sich an einer axialen Fläche der Lagernabe anlegt. Zum anderen bewirkt der Verformungseingriff einen geringen Durchmesserzuwachs im Bereich unter der Nabe, so daß der Festsitz auch in Umfangsrichtung verstärkt wird. Der sonst notwendige Preßsitz der Lagernabe auf der Welle wird auf diese Weise gleichzeitig mit der axialen Sicherung erzeugt. Die sonst üblichen Vorbereitungen wie Aufrauhen der Welle im Bereich des Lagersitzes oder Verringern des Wellendurchmessers vor dem Lagersitz können entfallen. Da sich die Erhebung aus dem Material der Welle heraus direkt an die Außenseiten des Lagers anlegt, ist eine spiellose Befestigung und Sicherung erreicht, ohne daß hierfür enge Toleranzen beachtet werden müssen.

Durch die in den Unteransprüchen aufgeführten Merkmale sind vorteilhafte Weiterbildungen nach dem Hauptanspruch möglich. Um die Belastung auf das Lager gering zu halten, kann es von Vorteil sein, wenn sich die Erhebung nur über einen Teil des Umfanges der Welle erstreckt. Bei erheblichem Axialdruck auf das Lager wird die Erhebung bevorzugt über den gesamten Umfang der Welle geführt.

Die durch Rollen erzeuge Erhebung legt sich formgenau an die Axialfläche des Nabenteils an. Außerdem ist durch die beim Rollen verwendete abgerundete Formgebung der in solchen verjüngten Bereichen verstärkt auftretenden Kerbwirkungen optimal entgegengewirkt.

Durch das erfindungsgemäße Verfahren zum Herstellen einer Wellen-Naben-Verbindung ist eine sehr kostengünstige und montagefreundliche Herstellung möglich.

### Zeichnung

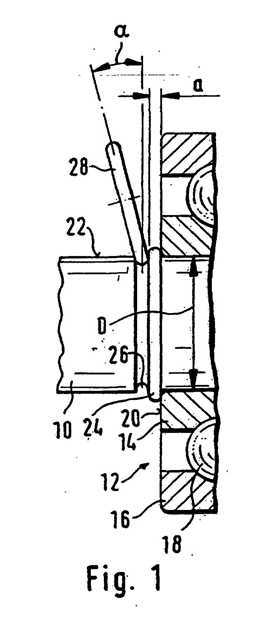

In der Zeichnung ist ein Ausführungsbeispiel der erfindungsgemäßen Herstellung einer Wellen-Naben-Verbindung dargestellt und in der nachfolgenden Beschreibung näher erläutert. Figur 1 zeigt dieses Ausführungsbeispiel im Schnitt.

### Beschreibung des Ausführungsbeispiels

In der Figur 1 ist eine Welle 10 dargestellt, die ein Kugellager 12 trägt. Das Kugellager 12 weist ein Nabenteil 14, einen Außenring 16 sowie mehrere Kugeln 18 auf. Die Kugeln 20 können durch einen Käfig gesichert sein (nicht dargestellt).

Im Bereich einer Axialfläche 20 des Nabenteils 14 ist aus der Wellenoberfläche 22 eine Erhebung 24 ausgeformt. Auf der der Axialfläche 20 gegenüberliegenden Seite der Erhebung 24 ist in die Wellenoberfläche 22 eine Vertiefung 26 eingebracht. Die Erhebung 24, die durch plastische Verformung der Wellenoberfläche 22 erzeugt wurde, liegt direkt an der Axialfläche 20 an.

Die Erhebung 24 weist die Form eines Ringwulstes auf, der mittels eines Rollwerkzeugs 28 durch Ausdrücken des Materials aus der Vertiefung 26 erzeugt wurde. Die Erhebung 24 erstreckt sich über den gesamten Umfang der Welle und ermöglich so eine gleichmäßige Abstützung auch unter erhöhter Belastung.

Das Rollwerkzeug 28 wird im Ausführungsbeispiel unter einem Winkel α gegen die Axialfläche 20 und in einem Abstand a, der der Dicke der Erhebung entspricht, geführt. Für ein optimales Erzeugen der Erhebung hat sich ein Winkel α im Bereich von 0° bis 45°, insbesondere von 15° erwiesen. Es ist jedoch auch möglich, nach dem radialen Eindrücken und Rollieren das Werkzeug in Richtung der Axialfläche 20 zu drücken, so daß sich der erzeugte Bund an dieser Axialfläche 20 spaltlos anlegt. Der Abstand a liegt vorteilhaft im Bereich von 0,5 mm bis 1,5 mm, insbesondere bei 1 mm.

Durch die plastische Verformung der Welle 10 im Bereich neben dem Nabenteil 14 wird auch das Material der Welle 10 innerhalb des Nabenteilinnendurchmessers D zumindest im Bereich der Axialfläche 14 aufgeweitet. Dadurch wird in diesem Bereich ein zusätzlicher Preßsitz erreicht, der einem Verdrehen des Nabenteils 14 auf der Welle 10 entgegenwirkt.

Bei einem bevorzugten Verfahren zur Herstellung einer Wellen-Naben-Verbindung mit einer Sicherung wird auf die Welle 10 das Kugellager 12 aufgesteckt und im zu befestigenden Bereich fixiert. Danach wird mit einem Rollwerkzeug 28 die Erhebung 24 so ausgeformt, daß sich das Material unter plastischer Verformung als Erhebung an der Axialfläche 20 des Nabenteils 14 anlegt.

Es ist nicht notwendig, daß sich die durch Rollen hergestellte Erhebung 24 über den gesamten Umfang der Welle 12 erstreckt.

## Patentansprüche

1. Verfahren zum Herstellen einer Wellen-Naben-Verbindung zum Sichern von Lagern, wobei nach dem Aufstecken der Nabe (14) auf die Welle (10), eine Erhebung (24, 30) durch eine plastische Verformung der Wellenoberfläche (22) so erzeugt wird, daß sich die Erhebung (24, 30) an einer Axialfläche (20) der Nabe (14) anlegt und axiales Verschieben verhindert, und die Erhebung (24) durch Rollen einer Ringnut (26) mittels eines Rollwerkzeugs (28) unmittelbar vor der Erhebung (24) aufgebracht wird, **dadurch gekennzeichnet, dass** das Rollwerkzeug (28) unter einem Winkel (α) von 0° bis 45° gegenüber der Axialfläche (20) der Welle (10) geführt wird.

2. Verfahren nach Anspruch 1, **dadurch gekennzeichnet, dass** das Rollwerkzeug (28) unter einem Winkel (α) von 15° gegenüber der Axialfläche geführt wird.

3. Verfahren nach Anspruch 1, **dadurch gekennzeichnet, dass** sich die Erhebung (24, 30) über den gesamten Umfang der Welle (10) erstreckt.

## Claims

1. Method of producing a shaft/hub connection for securing bearings, in which method, after the hub (14) has been slipped onto the shaft (10), a prominence (24, 30) is produced by plastic deformation of the shaft surface (22) in such a way that the prominence (24, 30) abuts against an axial surface (20) of the hub (14) and prevents axial displacement, and the prominence (24) is applied by rolling an annular groove (26) by means of a rolling tool (28) directly in front of the prominence (24), **characterized in that** the rolling tool (28) is directed at an angle (α) of 0° to 45° relative to the axial surface (20) of the hub (14).

2. Method according to Claim 1, **characterized in that** the rolling tool (28) is directed at an angle (α) of 15° relative to the axial surface.

3. Method according to Claim 1, **characterized in that** the prominence (24, 30) extends over the entire circumference of the shaft (10).

## Revendications

1. Procédé pour fabriquer un assemblage arbre/moyeu afin de maintenir des paliers, selon lequel après avoir enfilé le moyeu (14) sur l'arbre (10) on produit un bossage (24, 30) en déformant plastiquement la surface de l'arbre (22) de telle manière que le bossage (24, 30) s'appuie sur une surface axiale (20) du moyeu (14) et empêche un déplacement axial, le bossage (24) étant appliqué en déformant une rainure annulaire (26) immédiatement devant le bossage (24) à l'aide d'un outil de roulage (28),
**caractérisé en ce que**
l'outil de roulage (28) est guidé selon un angle (α) compris entre 0° et 45° par rapport à la surface axiale (20) de l'arbre (10).

2. Procédé selon la revendication 1,
**caractérisé en ce que**
l'outil de roulage (28) est guidé selon un angle (α) de 15° par rapport à la surface axiale.

3. Procédé selon la revendication 1,
**caractérisé en ce que**
le bossage (24, 30) s'étend sur tout le pourtour de l'arbre (10).
